(19) **Europäisches Patentamt**

**European Patent Office**

**Office européen des brevets**

(11) **EP 0 953 254 B1**

(12) **EUROPEAN PATENT SPECIFICATION**

(45) Date of publication and mention
of the grant of the patent:
**14.06.2006 Bulletin 2006/24**

(51) Int Cl.:
*H04N 7/26* (2006.01)

(21) Application number: **98949197.2**

(86) International application number:
**PCT/IB1998/001757**

(22) Date of filing: **02.11.1998**

(87) International publication number:
**WO 1999/026417 (27.05.1999 Gazette 1999/21)**

(54) **MOTION-COMPENSATED PREDICTIVE IMAGE ENCODING AND DECODING**

BEWEGUNGSKOMPENSIERTE PRÄDIKTIVE BILDKODIERUNG UND -DEKODIERUNG

CODAGE ET DECODAGE D'IMAGES A COMPENSATION DE MOUVEMENT

(84) Designated Contracting States:
**DE FR GB SE**

(30) Priority: **17.11.1997 EP 97402763**
**13.02.1998 EP 98200461**

(43) Date of publication of application:
**03.11.1999 Bulletin 1999/44**

(73) Proprietor: **Koninklijke Philips Electronics N.V.**
**5621 BA Eindhoven (NL)**

(72) Inventors:
• **BAGNI, Daniele**
**NL-5656 AA Eindhoven (NL)**

• **DE HAAN, Gerard**
**NL-5656 AA Eindhoven (NL)**

(74) Representative: **Steenbeek, Leonardus Johannes**
**Philips**
**Intellectual Property & Standards**
**P.O. Box 220**
**5600 AE Eindhoven (NL)**

(56) References cited:
**EP-A1- 0 648 052      EP-A1- 0 720 355**

**Description**

The invention relates to motion-compensated predictive image encoding and decoding.

As set out in more detail in Sections 1-3 of the first priority application, motion-compensated predictive image encoding and decoding is well known in the art, see References [1]-[4]. A high-quality 3-Dimensional Recursive Search block matching algorithm, also described in the first priority application, is known from References [5]-[7].

As set out in the first priority application, a first motion-compensated predictive image encoding technique (the H.263 standard) is known in which motion vectors are estimated and used for 16*16 macro-blocks. This large macro-block size results in a relatively low number of bits for transmitting the motion data. On the other hand, the motion-compensation is rather coarse. In an extension of the H.263 standard, motion vectors are used and transmitted for smaller 8*8 blocks: more motion data, but a less coarse motion-compensation. However, the higher number of bits required for motion data results in that fewer bits are available for transmitting image data, so that the overall improvement on image quality is less than desired.

It is, *inter alia,* an object of the invention to provide improved motion-compensated predictive image encoding and decoding techniques. To this end, a first aspect of the invention provides an image encoding method and device as defined in claims 1 and 3. A second aspect of the invention provides an image decoding method and device as defined in claims 4 and 6. Further aspects of the invention provide a multi-media apparatus (claim 7), an image signal display apparatus (claim 8), and an image signal (claim 9). Advantageous embodiments are defined in dependent claims 2 and 5.

In a method of motion-compensated predictive image encoding in accordance with a primary aspect of the present invention, first motion vectors are estimated for first objects, the first motion vectors are filtered to obtain second motion vectors for second objects, the second objects being smaller than the first objects, prediction errors are generated in dependence on the second motion vectors, and the first motion vectors and the prediction errors are combined.

These and other aspects of the invention will be apparent from and elucidated with reference to the embodiments described hereinafter.

In the drawings:

Fig. 1 shows a basic DPCM/DCT video compression block diagram in accordance with the present invention;
Fig. 2 shows a temporal prediction unit having a motion vector post-filter (MVPF) in accordance with the present invention;
Fig. 3 illustrates block erosion from one vector per 16*16 macro-block to one vector for every 8*8 block;

Fig. 4 shows a decoder block diagram in accordance with the present invention; and
Fig. 5 shows a image signal reception device in accordance with the present invention.

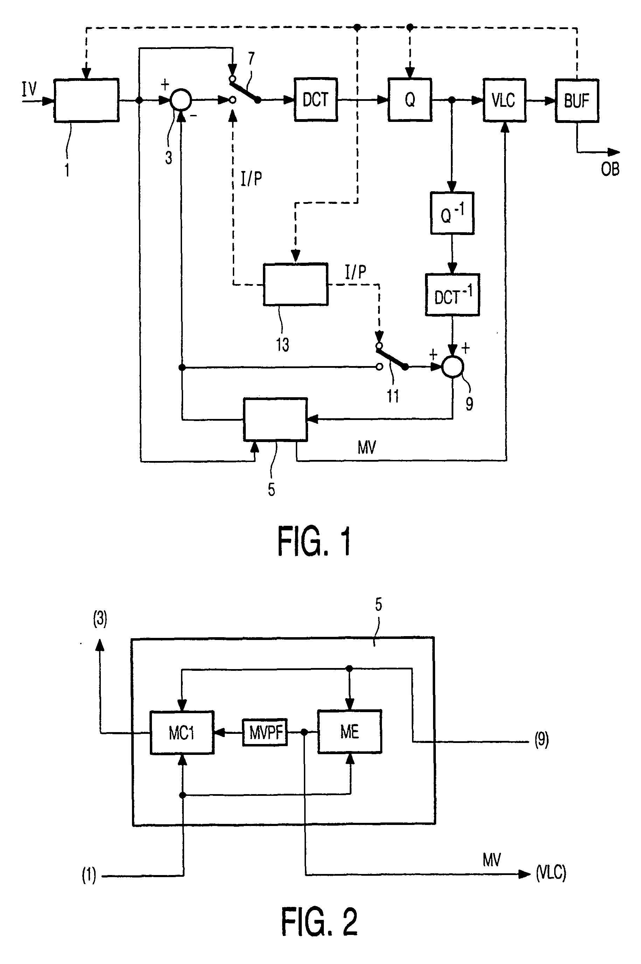

In the image encoder of Fig. 1, an input video signal IV is applied to a frame skipping unit 1. An output of the frame skipping unit 1 is connected to a non-inverting input of a subtracter 3 and to a first input of a change-over switch 7. The output of the frame skipping unit 1 further supplies a current image signal to a temporal prediction unit 5. An inverting input of the subtracter 3 is connected to an output of the temporal prediction unit 5. A second input of the change-over switch 7 is connected to an output of the subtracter 3. An output of the change-over switch 7 is connected to a cascade arrangement of a Discrete Cosine Transformation encoder DCT and a quantizing unit Q. An output of the quantizing unit Q is connected to an input of a variable length encoder VLC, an output of which is connected to a buffer unit BUF that supplies an output bit-stream OB.

The output of the quantizing unit Q is also connected to a cascade arrangement of a de-quantizing unit $Q^{-1}$ and a DCT decoder $DCT^{-1}$. An output of the DCT decoder $DCT^{-1}$ is coupled to a first input of an adder 9, a second input of which is coupled to the output of the temporal prediction unit 5 thru a switch 11. An output of the adder 9 supplies a reconstructed previous image to the temporal prediction unit 5. The temporal prediction unit 5 calculates motion vectors MV which are also encoded by the variable length encoder VLC.

The buffer unit BUF supplies a control signal to the quantizing unit Q, and to a coding selection unit 13 which supplies an Intra-frame / Predictive encoding control signal I/P to the switches 7 and 11. If intra-frame encoding is carried out, the switches 7, 11 are in the positions shown in Fig. 1.

In accordance with the present invention, the image encoder of Fig. 1 is characterized by the special construction of the temporal prediction unit 5 which will be described in more detail by means of Fig. 2.

As shown in Fig. 2, the temporal prediction unit 5 includes a motion estimator ME and a motion-compensated interpolator MCI which both receive the current image from the frame skipping unit 1 and the reconstructed previous image from the adder 9. In accordance with the present invention, the motion vectors MV calculated by the motion estimator ME are filtered by a motion vector post-filter MVPF before being applied to the motion-compensated interpolator MCI.

In this Section we will describe the real innovative part of our proposal, the motion vector post-filtering (MVPF). Preferably, we want to use the overlapped block motion-compensation based on blocks of size 8*8, as it is actually specified in the Advanced Prediction Mode (APM) of the H.263 standard (described in more detail in the first priority application), in both the encoding and decoding terminals, while transmitting and receiving only macro-block (MB) motion vectors estimated for 16*16 macro-blocks to not increase the bit-rate. This means that both terminals have to use the same MVPF, to re-assign the MB vectors to blocks of 8*8 pixels, as performed in the motion estimation part of APM. Fig. 2 shows the temporal prediction unit 5 including the MVPF.

Even if the MVPF should not depend on the estimation strategy, we strongly recommend to use it jointly with the motion estimator described in References [5]-[7], to obtain the best performances. Of course, there are several solutions to calculate the 8*8 block vectors, for example by a weighted averaging of the adjacent 16*16 macro-block vectors, anyway we will describe in detail only what we consider the best solution, due to the inherent features of our new motion estimator, the block erosion MVPF.

As reported in References [1]-[4], in the H.263 standard the motion information is limited to one vector per macro-block of X*Y = 16*16 pixels. Therefore, in accordance with a preferred embodiment, the MVPF performs a block erosion to eliminate fixed block boundaries from the vector field, by re-assigning a new vector to a block of sizes (X/2)*(Y/2) = 8*8.

If MVc = $\overline{d}(\overline{b}_c$, t) is a macro-block vector centered in $\overline{b}_c$ and its four adjacent macro-block vectors are given by:

$$MVl = \overline{d}(\overline{b}_c - \begin{pmatrix} X \\ 0 \end{pmatrix}, t)$$

$$MVr = \overline{d}(\overline{b}_c - \begin{pmatrix} -X \\ 0 \end{pmatrix}, t)$$

$$MVa = \overline{d}(\overline{b}_c - \begin{pmatrix} 0 \\ Y \end{pmatrix}, t)$$

$$MVb = \overline{d}(\overline{b}_c - \begin{pmatrix} 0 \\ -Y \end{pmatrix}, t)$$

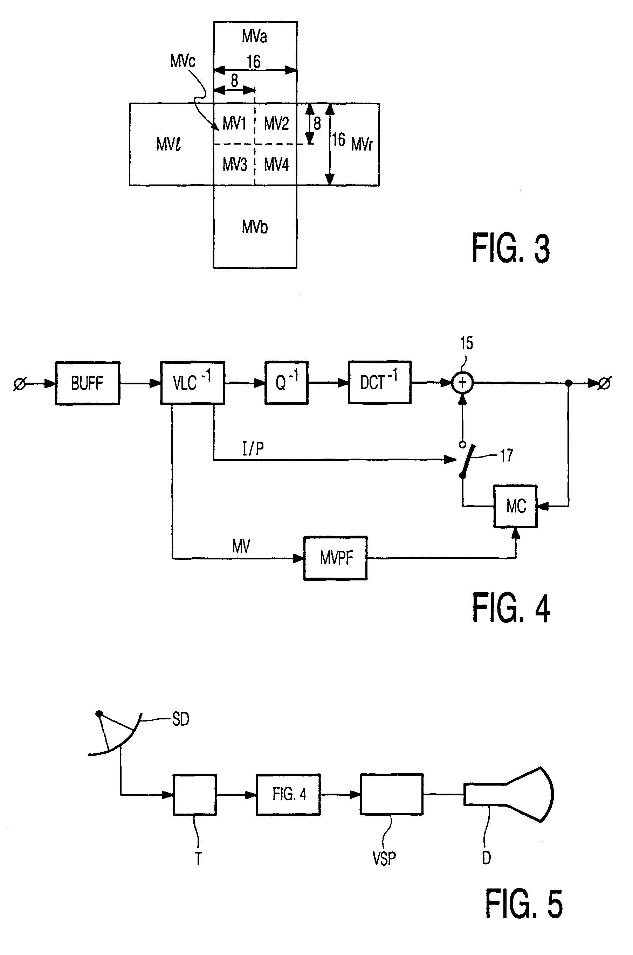

the four 8*8 blocks, numbered as in Fig. 3, will be assigned their new vectors according to the following:

     MV1 = median(MV1, MVc, MVa)
     MV2 = median(MVa, MVc, MVr)
     MV3 = median(MV1, MVc, MVb)
     MV4 = median(MVr, MVc, MVb)

More specifically, the filtering step MVPF comprises the steps of:

providing x and y motion vector components of a given macro-block MVc and of macro-blocks MV1, MVr, MVa, MVb adjacent to the given macro-block MVc; and
supplying for each block MV1 of a number of blocks MV1-MV4 corresponding to the given macro-block MVc, x and y motion vector components respectively selected from the x and y motion vector components of the given macro-block MVc and from the x and y motion vector components of two blocks MV1, MVa adjacent to the block MV1.

Fig. 3 shows the block erosion of a macro-block vector MVc for a 16*16 macro-block into four block vectors MV1, MV2, MV3, MV4 for 8*8 blocks. Block erosion as such for use in a field-rate converter in a television receiver is known from US-A-5,148,269 (Attorneys' docket PHN 13,396). That patent does not suggest that block erosion can advantageously be used to transmit motion vectors estimated for macro-blocks, while a four times larger number of vectors is used in both the encoder and the decoder to obtain prediction errors for blocks which are four times smaller than the macro-blocks.

This solution has not been mentioned in the H. 263 standard, but it is fully H.263 compatible. At the start of the multi-media communication the two terminals exchange data about their processing standard and non-standard capabilities (see Reference [4] for more details). If we assume that, during the communication set-up, both terminals declare this MVPF capability, they will easily interface with each other. Hence, the video encoder will transmit only MB vectors for 16*16 macro-blocks, while the video decoder will post-filter them in order to have a different vector for every 8*8 block. In the temporal interpolation process both terminals use the overlapped block motion compensation, as it is specified in the H. 263 APM. Thanks to this method, we can achieve the same image quality as if the APM was used, but without increasing the bit-rate.

If at least one terminal declares to have not this capability, a flag can be forced in the other terminal to switch it off.

Fig. 4 shows a decoder in accordance with the present invention. An incoming bit-stream is applied to a buffer BUFF having an output which is coupled to an input of a variable length decoder VLC$^{-1}$. The variable length decoder VLC$^{-1}$ supplies image data to a cascade arrangement of an inverse quantizer Q$^{-1}$ and a DCT decoder DCT$^{-1}$. An output of the DCT decoder DCT$^{-1}$ is coupled to a first input of an adder 15, an output of which supplies the output signal of the decoder. The variable length decoder VLC$^{-1}$ further supplies motion vectors MV for 16*16 macro-blocks to a motion vector post-filter MVPF to obtain motion vectors for 8*8 blocks. These latter motion vectors are applied to a motion-compensation unit MC which receives the output signal of the decoder. An output signal of the motion-compensation unit MC is applied to a second input of the adder 15 thru a switch 17 which is controlled by an Intra-frame / Predictive encoding control signal I/P from the variable length decoder VLC[-1].

Fig. 5 shows a image signal reception device in accordance with the present invention. Parts (T, Fig. 4, VSP) of this device may be part of a multi-media apparatus. A satellite dish SD receives a motion-compensated predictively encoded image signal in accordance with the present invention. The received signal is applied to a tuner T, the output signal of which is applied to the decoder of Fig. 4. The decoded output signal of the decoder of Fig. 4 is subjected to normal video signal processing operations VSP, the result of which is displayed on a display D.

It is interesting to note that in one example (described in more detail in the first priority application), the motion vectors (macro-block information) need from 13-18% of the total bit-rate in the basic H.263 standard, and 19-25 % in the H.263 standard with APM and UMV. UMV means Unrestricted Motion Vectors and is described in more detail in the first priority application. Basically, UMV means that the search range is quadrupled from [-16, +15.5] to [-31.5, +31.5].

Thanks to our method, we can use the difference between these amounts of bits for relaxing the DCT coefficients quantization instead of encoding the motion vectors information related to blocks, so that we achieve higher sharpness pictures than actual H.263 standard image encoders with APM, without increasing the bit-rates.

On the other hand, if the DCT coefficients quantization is not relaxed, we can encode and transmit "typical H.263 plus APM quality" pictures, while reducing the bit-rate because of no block motion information transmission, thus increasing the channel efficiency.

Finally, in our method every block will be assigned its own motion vectors, while in the APM of H.263 standard not all the macro-blocks will be processed as four separate blocks. In other words, in APM is always possible that there will remain a consistent number of macro-blocks to which a motion vector is assigned, while our method always assigns one proper motion vector to every block.

A primary aspect of the invention can be summarized as follows. The invention relates to a low bit-rate video coding method fully compatible with H.263 standard and comprising a Motion Vector Post-Filtering (MVPF) step. This MVPF step assigns a different motion vector to every block composing a macro-block, starting from the original motion vector of the macro-block itself. In this way the temporal prediction is based on 8*8 pixels blocks instead of 16*16 macro-blocks, as actually is done when the negotiable option called Advanced Prediction Mode (APM) is used in the H.263 encoder. The video decoding terminal has to use the same MVPF step to produce the related block vectors.

Furthermore, since only macro-block vectors are differentially encoded (in a variable length fashion) and transmitted, a considerable bit-rate reduction is also achieved, in comparison with APM.

This method is not yet H.263 standardized, so it has to be signalled between the two terminals, via the H.245 protocol. It can be used at CIF, QCIF and SQCIF resolution.

The following salient features of the invention are noteworthy.

A method and an apparatus realizing the method, for H.263 low bit-rate video encoding and decoding stages, which inherently performs the same topics of the so called APM in terms of motion estimation and motion compensation based on 8*8 pixels blocks instead of 16*16 macro-blocks, as actually done only in H.263 encoders and decoders that use the APM.

A method and an apparatus realizing the method which further includes a MVPF step placed in the motion estimation stage of the temporal prediction loop of the H.263 video encoder.

A method and an apparatus realizing the method which further includes a MVPF step placed in the temporal interpolation stage of the H.263 video decoder.

A method and an apparatus realizing the method which achieves the same (or even a superior) image quality of the APM, since the temporal prediction is based on 8*8 pixels blocks instead of 16*16 macro-blocks.

A method and an apparatus realizing the method which achieves a lower bit-rate in comparison with APM, since only macro-block vectors are differential encoded and transmitted. The image quality is similar to the H.263 standard with APM.

A method and an apparatus realizing the method which achieves a superior image quality than the H.263 standard with APM, since the bit-budget saved by encoding and transmitting only macro-block vectors is re-used for a less coarse quantization of DCT coefficients. The bit-rates are similar to ones achievable from the H.263 standard with APM.

A method and an apparatus realizing the method where the MVPF is a block erosion stage, when the motion estimation is calculated on macro-blocks of H.263 standard dimensions (16*16 pixels). Anyway any other solution can be applied, such as a weighted averaging of adjacent macro-block vectors.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The invention can be implemented by means of hardware comprising several distinct elements, and by means of a suitably programmed computer. In the device claim enumerating several means, several of these means can be embodied by one and the same item of hardware. While in a preferred embodiment, 16*16 macro-blocks are reduced to 8*8 blocks, a further reduction to quarter-blocks of size 4*4 is also possible, in which case the predictive encoding is based on the 4*4 quarter-blocks.

References

[1] ITU-T DRAFT Recommendation H.263, Video coding for low bit rate communication, 2 May 1996.
[2] K. Rijkse, "ITU standardisation of very low bit rate video coding algorithms", Signal Processing: Image Communication 7, 1995, pp 553-565.
[3] ITU-T DRAFT Recommendation H.261, Video codec for audio-visual services at px64 kbits, March 1993.
[4] ITU-T DRAFT Recommendation H.245, Control protocol for multimedia communications, 27 November 1995.
[5] G. de Haan, P.W.A.C. Biezen, H. Huijgen, O. A. Ojo, "True motion estimation with 3-D recursive search block matching", IEEE Trans. Circuits and Systems for Video Technology, Vol. 3, October 1993, pp. 368-379.
[6] G. de Haan, P.W.A.C. Biezen, "Sub-pixel motion estimation with 3-D recursive search block-matching", Signal Processing: Image Communication 6 (1995), pp. 485-498.
[7] P. Lippens, B. De Loore, G. de Haan, P. Eeckhout, H. Huijgen, A. Loning, B. McSweeney, M. Verstraelen, B. Pham, J. Kettenis, "A video signal processor for motion-compensated field-rate up-conversion in consumer television", IEEE Journal of Solid-state Circuits, Vol. 31, no. 11, November 1996, pp. 1762-1769.

**Claims**

1. A method of motion-compensated predictive image encoding, comprising the steps of:

   estimating (ME) first motion vectors (MVc, MV1, MVr, MVa, MVb) for first objects (16*16);
   filtering (MVPF) each of said first motion vectors (MVc, MV1, MVr, MVa, MVb) to obtain second motion vectors (MV1, MV2, MV3, MV4 for second objects (8*8), said second objects (8*8) being smaller than said first objects (16*16) and corresponding to a given-first object (16*16).
   generating (3) prediction errors in dependence on said second motion vectors (MV1, MV2, MV3, MV4) only; and
   encoding (VLC) said first motion vectors (MVc, MV1, MVr, MVa, MVb) and said prediction errors.

2. A method as claimed in claim 1, wherein said first objects (16*16) are macro-blocks, said second objects (8*8) are blocks, and said filtering step (MVPF) comprises the steps of:

   providing x and y motion vector components of a given macro-block (MVc) and of macro-blocks (MV1, MVr, MVa, MVb) adjacent to said given macro-block (MVc); and
   supplying for each block (MV1) of a number of blocks (MV1-MV4) corresponding to said given macro-block (MVc), x and y motion vector components respectively selected from said x and y motion vector components of said given macro-block (MVc) and from the x and y motion vector components of two blocks (MV1, MVa) adjacent to said block (MV1).

3. A device for motion-compensated predictive image encoding, comprising:

   means for estimating (ME) first motion vectors (MVc, MV1, MVr, MVa, MVb) for first objects (16*16);
   means for filtering (MVPF) each of said first motion vectors (MVc, MV1, MVr, MVa, MVb) to obtain second motion vectors (MV1, MV2, MV3, MV4) for second objects (8*8), said second objects (8*8) being smaller than said first objects (16*16) and corresponding to a given first object (16*16);
   means for generating (3) prediction errors in dependence on said second motion vectors (MV1, MV2, MV3, MV4) only; and
   means for encoding (VLC) said first motion vectors (MVc, MV1, MVr, MVa, MVb) and said prediction errors.

4. A method of motion-compensated predictive decoding, comprising the steps of:

   generating (VLC$^{-1}$) first motion vectors (MVc, MV1, MVr, MVa, MVb) and prediction errors from an input bit-stream, said first motion vectors (MVc, MV1, MVr, MVa, MVb) relating to first objects (16*16) and said prediction errors relating to second objects (8*8) only;
   filtering (MVPF) each of said first motion vectors (MVc, MV1, MVr, MVa, MVb) to obtain second motion vectors (MV1, MV2, MV3, MV4) for second objects (8*8), said second objects (8*8) being smaller than said first objects (16* 16) and corresponding to a given first object (16*16); and
   generating (15, MC) an output signal in dependence on said prediction errors and said second motion vectors (MV1, MV2, MV3, MV4).

5. A method as claimed in claim 4, wherein said first objects (16*16) are macro-blocks, said second objects (8*8) are blocks, and said filtering step (MVPF) comprises the steps of:

providing x and y motion vector components of a given macro-block (MVc) and of macro-blocks (MV1, MVr, MVa, MVb) adjacent to said given macro-block (MVc); and

supplying for each block (MV1) of a number of blocks (MV1-MV4) corresponding to said given macro-block (MVc), x and y motion vector components respectively selected from said x and y motion vector components of said given macro-block (MVc) and from the x and y motion vector components of two blocks (MV1, MVa) adjacent to said block (MV 1).

6. A device for motion-compensated predictive decoding, comprising:

means for generating (VLC$^{-1}$) first motion vectors (MVc, MV1, MVr, MVa, MVb) and prediction errors from an input bit-stream, said first motion vectors (MVc, MV1, MVr, MVa, MVb) relating to first objects (16*16) and said prediction errors relating to second objects (8*8) only;

means for filtering (MVPF) said first motion vectors (MVc, MV1, MVr, MVa, MVb) to obtain second motion vectors (MV1, MV2, MV3, MV4) for second objects (8*8), said second objects (8*8) being smaller than said first objects (16*16) and corresponding to a given first object (16*16); and

means for generating (15, MC) an output signal in dependence on said prediction errors and said second motion vectors (MV1, MV2, MV3, MV4).

7. A multi-media apparatus, comprising:

means (T) for receiving a motion-compensated predictively encoded image signal; and

a motion-compensated predictive decoding device as claimed in claim 6 for generating a decoded image signal.

8. An image signal display apparatus, comprising:

means (T) for receiving a motion-compensated predictively encoded image signal;

a motion-compensated predictive decoding device as claimed in claim 6 for generating a decoded image signal; and

means (D) for displaying said decoded image signal.

9. A motion-compensated predictively encoded image signal, comprising:

motion vectors (MVc, MV1, MVr, MVa, MVb) relating to first objects (16*16); and

prediction errors relating to second objects (8*8), said second objects (8*8) being smaller than said first objects (16*16) and corresponding to a given first object (16*16), wherein said prediction errors depend on motion vectors for said second objects (8*8).

**Patentansprüche**

1. Verfahren zur bewegungskompensierten, prädiktiven Bildcodierung, das die folgenden Schritte umfasst:

Schätzen (ME) erster Bewegungsvektoren (MVc, MV1, MVr, MVa, MVb) für erste Objekte (16 × 16),

Filtern (MVPF) eines jeden der ersten Bewegungsvektoren (MVc, MV1, MVr, MVa, MVb), um zweite Bewegungsvektoren (MV1, MV2, MV3, MV4) für zweite Objekte (8 × 8) zu erhalten, wobei die zweiten Objekte (8 × 8) kleiner als die ersten Objekte (16 × 16) sind und einem gegebenen ersten Objekt (16 × 16) entsprechen,

Erzeugen (3) von Prädiktionsfehlern in Abhängigkeit von nur den zweiten Bewegungsvektoren (MV1, MV2, MV3, MV4) und

Codieren (VLC) der ersten Bewegungsvektoren (MVc, MV1, MVr, MVa, MVb) und der Prädiktionsfehler.

2. Verfahren nach Anspruch 1, bei dem die ersten Objekte (16 × 16) Makroblöcke sind, die zweiten Objekte (8 × 8) Blöcke sind und der Filterungsschritt (MVPF) die folgenden Schritte umfasst:

Bereitstellen von x- und y-Bewegungsvektorkomponenten für einen gegebenen Makroblock (MVc) und für Makroblöcke (MV1, MVr, MVa, MVb), die an den gegebenen Makroblock (MVc) grenzen, und

für jeden Block (MV1) aus einer Anzahl von Blöcken (MV1 bis MV4), die dem gegebenen Makroblock (MVc) entsprechen, Liefern von x- und y-Bewegungsvektorkomponenten, die jeweils aus den x- und y-Bewegungsvektorkomponenten des gegebenen Makroblocks (MVc) und aus den x- und y-Bewegungsvektorkomponenten der zwei Blöcke (MV1, MVa), die an den Block (MV1) grenzen, ausgewählt sind.

3. Vorrichtung zur bewegungskompensierten, prädiktiven Bildcodierung, die Folgendes umfasst:

Mittel zum Schätzen (ME) erster Bewegungsvektoren (MVc, MV1, MVr, MVa, MVb) für erste Objekte (16 × 16),

Mittel zum Filtern (MVPF) eines jeden der ersten Bewegungsvektoren (MVc, MV1, MVr, MVa, MVb), um zweite Bewegungsvektoren (MV1, MV2, MV3, MV4) für zweite Objekte (8 × 8) zu erhalten, wobei die zweiten Objekte (8 × 8) kleiner als die ersten Objekte (16 × 16) sind und einem gegebenen ersten Objekt (16 × 16) entsprechen,

Mittel zum Erzeugen (3) von Prädiktionsfehlern in Abhängigkeit von nur den zweiten Bewegungsvektoren (MV 1, MV2, MV3, MV4) und Mittel zum Codieren (VLC) der ersten Bewegungsvektoren (MVc, MV1, MVr, MVa, MVb) und der Prädiktionsfehler.

4. Verfahren zur bewegungskompensierten, prädiktiven Decodierung, das die folgenden Schritte umfasst:

Erzeugen (VLC$^{-1}$) von ersten Bewegungsvektoren (MVc, MV1, MVr, MVa, MVb) und Prädiktionsfehlern aus einem Eingangsbitstrom, wobei sich die ersten Bewegungsvektoren (MVc, MV1, MVr, MVa, MVb) auf erste Objekte (16 × 16) beziehen und sich die Prädiktionsfehler nur auf zweite Objekte (8 × 8) beziehen,

Filtern (MVPF) eines jeden der ersten Bewegungsvektoren (MVc, MV1, MVr, MVa, MVb), um zweite Bewegungsvektoren (MV1, MV2, MV3, MV4) für zweite Objekte (8 × 8) zu erhalten, wobei die zweiten Objekte (8 × 8) kleiner als die ersten Objekte (16 × 16) sind und einem gegebenen ersten Objekt (16 × 16) entsprechen,

Erzeugen (15, MC) eines Ausgangssignals in Abhängigkeit der Prädiktionsfehler und der zweiten Bewegungsvektoren (MV1, MV2, MV3, MV4).

5. Verfahren nach Anspruch 4, bei dem die ersten Objekte (16 × 16) Makroblöcke sind, die zweiten Objekte (8 × 8) Blöcke sind und der Filterungsschritt (MVPF) die folgenden Schritte umfasst:

Bereitstellen von x- und y-Bewegungsvektorkomponenten für einen gegebenen Makroblock (MVc) und für Makroblöcke (MV1, MVr, MVa, MVb), die an den gegebenen Makroblock (MVc) grenzen, und

für jeden Block (MV1) aus einer Anzahl von Blöcken (MV1 bis MV4), die dem gegebenen Makroblock (MVc) entsprechen, Liefern von x- und y-Bewegungsvektorkomponenten, die jeweils aus den x- und y-Bewegungsvektorkomponenten des gegebenen Makroblocks (MVc) und aus den x- und y-Bewegungsvektorkomponenten der zwei Blöcke (MV1, MVa), die an den Block (MV1) grenzen, ausgewählt sind.

6. Vorrichtung zur bewegungskompensierten, prädiktiven Decodierung, die Folgendes umfasst:

Mittel zum Erzeugen (VLC$^{-1}$) von ersten Bewegungsvektoren (MVc, MV1, MVr, MVa, MVb) und Prädiktionsfehlern aus einem Eingangsbitstrom, wobei sich die ersten Bewegungsvektoren (MVc, MV1, MVr, MVa, MVb) auf erste Objekte (16 × 16) beziehen und sich die Prädiktionsfehler nur auf zweite Objekte (8 × 8) beziehen,

Mittel zum Filtern (MVPF) der ersten Bewegungsvektoren (MVc, MV1, MVr, MVa, MVb), um zweite Bewegungsvektoren (MV1, MV2, MV3, MV4) für zweite Objekte (8 × 8) zu erhalten, wobei die zweiten Objekte (8 × 8) kleiner als die ersten Objekte (16 × 16) sind und einem gegebenen ersten Objekt (16 × 16) entsprechen, und

Mittel zum Erzeugen (15, MC) eines Ausgangssignals in Abhängigkeit der Prädiktionsfehler und der zweiten Bewegungsvektoren (MV1, MV2, MV3, MV4).

7. Multimedia-Gerät, das Folgendes umfasst:

Mittel (T) zum Empfangen eines bewegungskompensierten, prädiktiv codierten Bildsignals und

eine bewegungskompensierte, prädiktive Decodiereinrichtung nach Anspruch 6 zum Erzeugen eines decodierten Bildsignals.

8. Bildsignalanzeigegerät, das Folgendes umfasst:

Mittel (T) zum Empfangen eines bewegungskompensierten, prädiktiv codierten Bildsignals, eine bewegungskompensierte, prädiktive Decodiereinrichtung nach Anspruch 6 zum Erzeugen eines decodierten Bildsignals und Mittel (D) zum Anzeigen des decodierten Bildsignals.

9. Bewegungskompensiertes, prädiktiv codiertes Bildsignal, das Folgendes umfasst:

Bewegungsvektoren (MVc, MV1, MVr, MVa, MVb), die sich auf erste Objekte (16 × 16) beziehen, und

Prädiktionsfehler, die sich auf zweite Objekte (8 × 8) beziehen, wobei die zweiten Objekte (8 × 8) kleiner als die ersten Objekte (16 × 16) sind und einem gegebenen ersten Objekt (16 × 16) entsprechen, und wobei die Prädiktionsfehler von den Bewegungsvektoren für die zweiten Objekte (8 × 8) abhängen.

**Revendications**

1. Procédé de codage d'images prédictif à compensation de mouvement comprenant les étapes consistant à:

   estimer (ME) des premiers vecteurs de mouvement (MVc, MV1, MVr, MVa, MVb) pour des premiers objets (16*16);
   filtrer (MVPF) chacun desdits premiers vecteurs de mouvement (MVc, MV1, MVr, MVa, MVb) pour obtenir des seconds vecteurs de mouvement (MV1, MV2, MV3, MV4) pour des seconds objets (8*8), lesdits seconds objets (8*8) étant inférieurs audits premiers objets (16*16) et correspondant à un premier objet donné (16* 16);
   générer (3) seulement des erreurs de prédiction dépendamment desdits seconds vecteurs de mouvement (MV1, MV2, MV3, MV4); et
   coder (VLC) lesdits premiers vecteurs de mouvement (MVc, MV1, MVr, MVa, MVb) et lesdites erreurs de prédiction.

2. Procédé selon la revendication 1, dans lequel lesdits premiers objets (16*16) sont des macro-blocs, lesdits seconds objets (8*8) sont des blocs et ladite étape de filtrage (MVPF) comprend les étapes consistant à:

   fournir des composantes vectorielles de mouvement x et y d'un macro-bloc donné (MVc) et de macro-blocs (MV1, MVr, MVa, MVb) qui sont adjacents audit macro-bloc donné (MVc); et
   fournir pour chaque bloc (MV1) d'un certain nombre de blocs (MV1 à MV4) correspondant audit macro-bloc donné (MVc) des composantes vectorielles de mouvement x et y qui sont sélectionnées parmi les composantes vectorielles de mouvement x et y dudit macro-bloc donné (MVc) et parmi les composantes vectorielles de mouvement x et y de deux blocs (MV1, MVa) qui sont adjacents audit bloc (MV1).

3. Dispositif pour le codage d'images prédictif à compensation de mouvement comprenant:

   des moyens pour estimer (ME) des premiers vecteurs de mouvement (MVc, MV1, MVr, MVa, MVb) pour des premiers objets (16*16);
   des moyens pour filtrer (MVPF) chacun desdits premiers vecteurs de mouvement (MVc, MV1, MVr, MVa, MVb) pour obtenir des seconds vecteurs de mouvement (MV1, MV2, MV3, MV4) pour des seconds objets (8*8), lesdits seconds objets (8*8) étant inférieurs audits premiers objets (16*16) et correspondant à un premier objet donné (16*16);
   des moyens pour générer (3) seulement des erreurs de prédiction dépendamment desdits seconds vecteurs de mouvement (MV1, MV2, MV3, MV4); et
des moyens pour coder (VLC) lesdits premiers vecteurs de mouvement (MVc, MV1, MVr, MVa, MVb) et lesdites erreurs de prédiction.

4. Procédé de décodage prédictif à compensation de mouvement comprenant les étapes consistant à:

   générer (VLC$^{-1}$) des premiers vecteurs de mouvement (MVc, MV1, MVr, MVa, MVb) et des erreurs de prédiction à partir d'un flot binaire d'entrée, lesdits premiers vecteurs de mouvement (MVc, MV1, MVr, MVa, MVb) se rapportant à des premiers objets (16*16) et lesdites erreurs de prédiction se rapportant seulement aux seconds objets (8*8);
   filtrer (MVPF) chacun desdits premiers vecteurs de mouvement (MVc, MV1, MVr, MVa, MVb) pour obtenir des seconds vecteurs de mouvement (MV1, MV2, MV3, MV4) pour des seconds objets (8*8), lesdits seconds objets (8*8) étant inférieurs audits premiers objets (16*16) et correspondant à un premier objet donnée (16*16); et
   générer (15, MC) un signal de sortie dépendamment desdites erreurs de prédiction et desdits seconds vecteurs de mouvement (MV1, MV2, MV3, MV4).

5. Procédé selon la revendication 4, dans lequel lesdits premiers objets (16*16) sont des macro-blocs, lesdits seconds objets (8*8) sont des blocs et ladite étape de filtrage (MVPF) comprend les étapes consistant à:

   fournir des composantes vectorielles de mouvement x et y d'un macro-bloc donné (MVc) et de macro-blocs (MV1, MVr, MVa, MVb) qui sont adjacents audit macro-bloc donné (MVc); et
   fournir pour chaque bloc (MV1) d'un certain nombre de blocs (MV 1 à MV4) correspondant audit macro-bloc donné (MVc) des composantes vectorielles de mouvement x et y qui sont sélectionnées parmi les composantes vectorielles de mouvement x et y dudit macro-bloc donné (MVc), respectivement, parmi les composantes vectorielles de mouvement de deux blocs (MV1, MVa) qui sont adjacents audit bloc (MV1).

6. Dispositif pour le codage prédictif à compensation de mouvement comprenant:

   des moyens pour générer (VLC$^{-1}$) des premiers vecteurs de mouvement (MVc, MV1, MVr, MVa, MVb) et des erreurs de prédiction en provenance d'un flot binaire d'entrée, lesdits premiers vecteurs de mouvement (MVc, MV1, MVr, MVa, MVb) se rapportant à des premiers objets (16*16) et lesdites erreurs de prédiction se rapportant seulement à des seconds objets (8*8); des moyens pour filtrer (MVPF) lesdits premiers vecteurs de mouvement (MVc, MV1, MVr, MVa, MVb) pour obtenir des seconds vecteurs de mouvement (MV1, MV2, MV3, MV4) pour des seconds objets (8*8), lesdits seconds objets (8*8) étant inférieurs audits premiers objets (16*16) et correspondant à un premier objet donné (16*16); et

des moyens pour générer (15, MC) un signal de sortie dépendamment desdites erreurs de prédiction et desdits seconds vecteurs de mouvement (MV1, MV2, MV3, MV4).

7. Appareil multimédia comprenant:

des moyens (T) pour recevoir un signal d'image prédictivement codé à compensation de mouvement; et
un dispositif de décodage prédictif à compensation de mouvement selon la revendication 6 pour générer un signal d'image décodé.

8. Dispositif d'affichage de signal d'image comprenant:

des moyens (T) pour recevoir un signal d'image prédictivement codé à compensation de mouvement; et
un dispositif de décodage prédictif à compensation de mouvement selon la revendication 6 pour générer un signal d'image décodé; et
des moyens (D) pour afficher ledit signal d'image décodé.

9. Signal d'image prédictivement codé à compensation de mouvement comprenant:

des vecteurs de mouvement (MVc, MV1, MVr, MVa, MVb) se rapportant à des premiers objets (16*16); et
des erreurs de prédiction se rapportant à des seconds objets (8*8), lesdits seconds objets (8*8) étant inférieurs audits premiers objets (16*16) et correspondant à un premier objet donné (16*16) dans lequel lesdites erreurs de prédiction dépendent de vecteurs de mouvement pour lesdits seconds objets (8*8).

FIG. 1

FIG. 2

FIG. 3

FIG. 4

FIG. 5